# FASCICULE DE BREVET EUROPEEN

(11) **EP 2 302 764 B1**
(45) Date de publication et mention de la délivrance du brevet: **05.06.2013**
(21) Numéro de dépôt: 10306013.3
(22) Date de dépôt: 22.09.2010
(51) Int. Cl.: H02K 5/22, H02K 9/08, H01B 17/26

(54) **Machine électrique pressurisée**
Druckhaltende elektrische Maschine
Pressurised electrical machine

(30) Priorité: 23.09.2009 FR 0956550
(43) Date de publication de la demande: 30.03.2011
(73) Titulaire: Converteam Technology Ltd, Rugby Warwickshire CV21 1BU (GB)
(72) Inventeur: Durand, Daniel, 54710 Ludres (FR)
(74) Mandataire: Blot, Philippe Robert Emile

(56) Documents cités:
- EP-A1- 1 220 424
- US-A- 4 296 275
- US-B1- 6 300 698
- US-B1- 6 628 024

## Description

La présente invention concerne une machine électrique, du type comprenant une carcasse formée par une enceinte contenant un gaz comprimé, un arbre relié à la carcasse, un rotor solidaire de l'arbre et un stator portant des bobinages.

Dans ce type de machines électriques, généralement à grande vitesse et à haute tension, les éléments situés à l'intérieur de la carcasse fonctionnent dans le gaz naturel sous pression, par exemple supérieure à 80 bar.

Ces machines sont équipées d'une boîte à bornes qui elle est à la pression atmosphérique et est accessible à un utilisateur de la machine pour le raccordement électrique, c'est-à-dire le réseau par l'intermédiaire, pour ces machines à grande vitesse, d'un convertisseur statique de fréquence.

La séparation entre l'enceinte sous gaz sous pression et la boîte à bornes est réalisée par une bride déterminant la frontière entre la zone sous pression et l'extérieur à la pression atmosphérique et dans laquelle sont ménagées des traversées électriques constituées par des pièces conçues pour faire circuler le courant au travers de la paroi, en satisfaisant les conditions fonctionnelles c'est-à-dire l'isolation électrique, l'étanchéité au gaz ainsi que la tenue à la pression.

Du côté de l'intérieur de la machine, ces traversées électriques sont reliées aux bobinages du stator par des câbles électriques haute tension.

Cette disposition dans laquelle la séparation entre les deux zones est réalisée par une bride présente une certaine limite constructive.

En effet, la bride ne peut être équipée que de douze traversées au maximum.

Chaque traversée peut thermiquement compte tenu des isolants, accepter 400A ce qui fait au maximum 4 x 400A, c'est-à-dire 1600A en alimentation triphasée. La pression maximale d'utilisation est de 150 bar.

De plus, jusqu'à présent dans ce type de machine, les traversées électriques sont raccordées aux têtes des bobinages par des câbles ce qui présente des inconvénients.

En effet, ils sont encombrants par rapport à l'espace intérieur disponible, en particulier dans la tubulure haute pression reliant la bride avec l'intérieur de la carcasse et ils ont aussi l'inconvénient de mal résister à une dépressurisation rapide. En effet, les machines pressurisées doivent en cas d'urgence pouvoir être dépressurisées rapidement, sans être endommagées, ce qui n'est pas toujours le cas avec des câbles électriques.

Le but de l'invention est donc de proposer une machine électrique pressurisée et de forte puissance qui évite ces inconvénients.

A cet effet, l'invention a pour objet une machine électrique, du type comprenant une carcasse formée par une enceinte contenant un gaz comprimé, un arbre relié à la carcasse, un rotor solidaire de l'arbre et un stator portant des bobinages, **caractérisée en ce que** la carcasse comporte une pluralité de traversées électriques périphériques s'étendant radialement pour le passage dans chacune desdites traversées d'un élément de connexion électrique avec la tête d'un desdits bobinages.

Suivant d'autres modes de réalisation, la machine électrique comprend une ou plusieurs des caractéristiques suivantes, prises isolément ou suivant toutes les combinaisons techniquement possibles :
- chaque traversée est ménagée dans la carcasse à proximité de la tête de bobinage à raccorder,
- chaque élément de connexion est formé par une première partie comportant un passe-tige disposé dans la traversée correspondante et par une seconde partie reliant ledit passe-tige à la tête du bobinage correspondant,
- la seconde partie est formée par une barrette de cuivre isolée, et
- le gaz à l'intérieur de la carcasse est comprimé à une pression supérieure à 100 bar, de préférence supérieure à 150 bar.

Les caractéristiques et avantages de l'invention apparaîtront à la lecture de la description qui va suivre, donnée uniquement à titre d'exemple et faite en référence aux dessins annexés, sur lesquels :
- la Fig. 1 est une vue en perspective d'une machine électrique comportant un stator et une carcasse de support de ce stator, conforme à l'invention,
- la Fig. 2 est une vue en coupe longitudinale axiale de la machine électrique, et

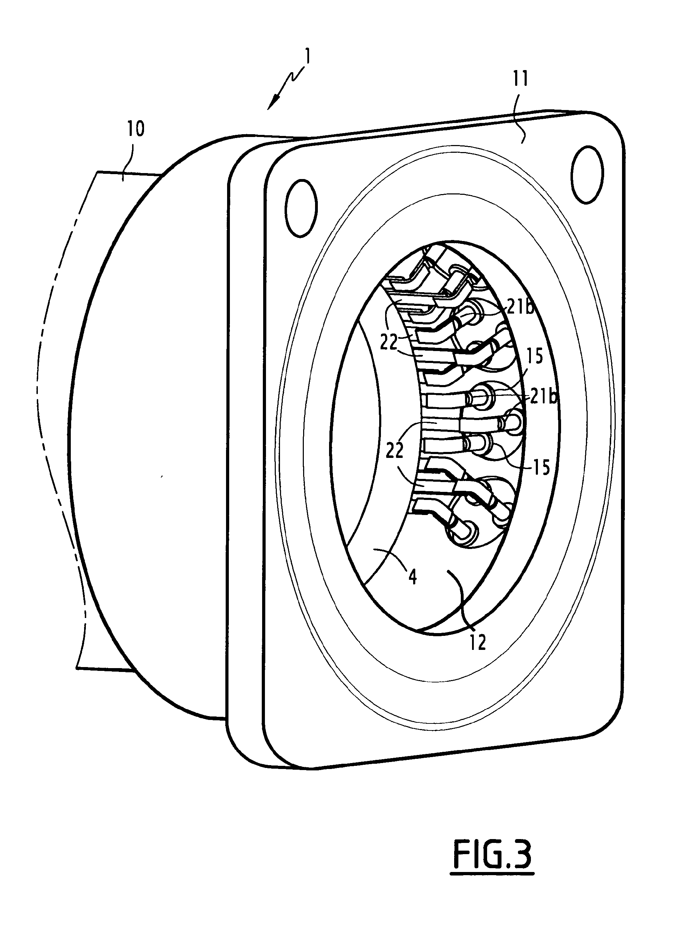

- la Fig. 3 est une vue en perspective partielle d'une extrémité de la carcasse de la machine électrique

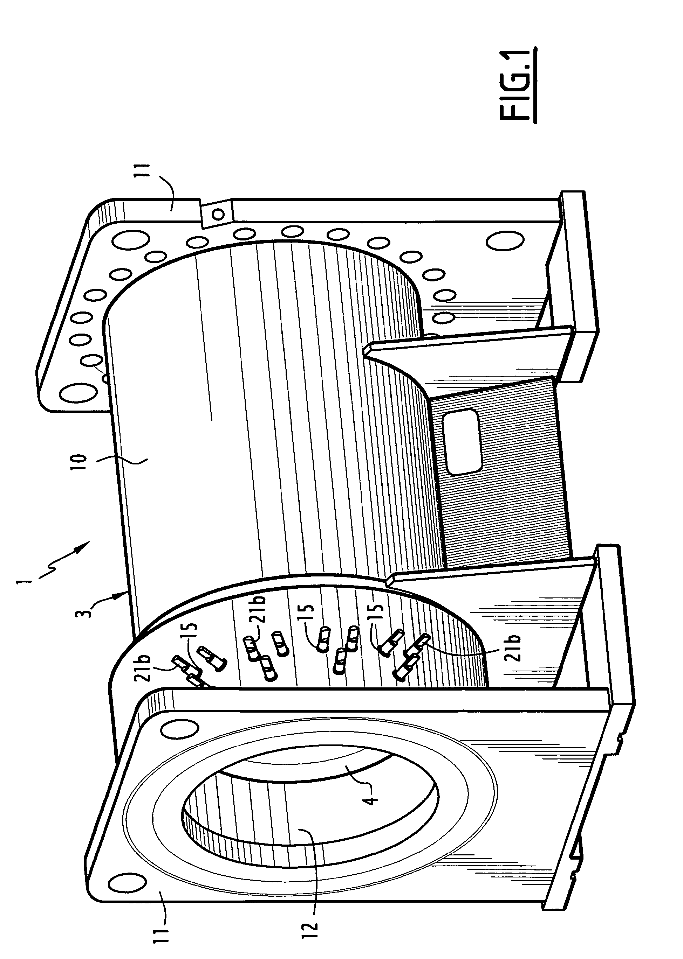

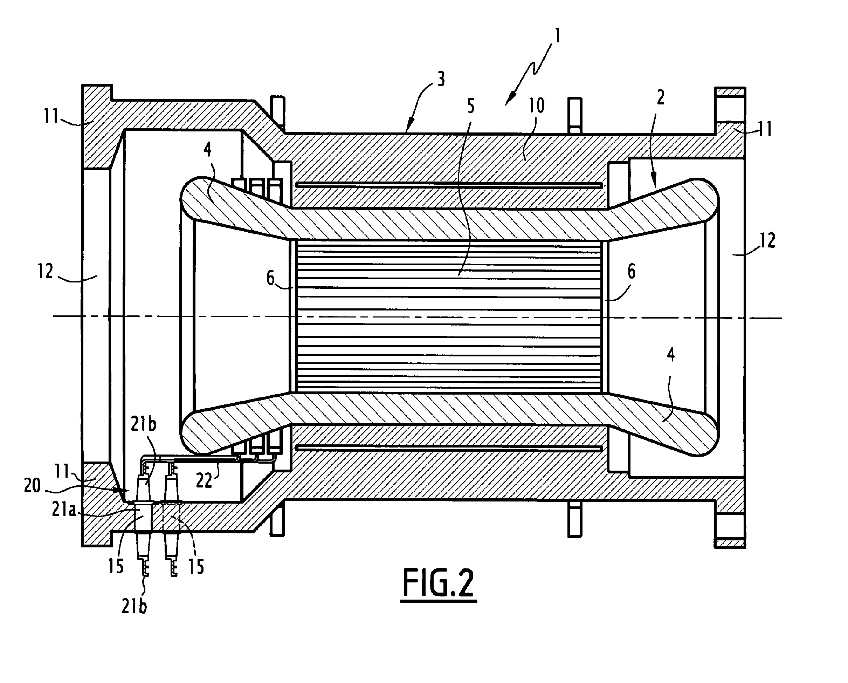

Sur les Fig.1 et 2, on a représenté partiellement une machine électrique désignée dans son ensemble par la référence 1 et qui comprend, de manière classique, notamment un stator 2 et une carcasse 3 de support de ce stator 2.

Le stator 2 comprend des enroulements conducteurs 4 également appelés bobinages, s'étendant à l'intérieur de paquets 5 de tôle magnétique, placés entre deux plateaux de serrage 6 radiaux reliés par des barreaux de tension longitudinaux, non représentés. Les plateaux 6 sont formés chacun par un anneau circulaire. La carcasse 3 de support du stator 2 comporte une enveloppe extérieure 10 dans laquelle est placé ledit stator 2.

Cette enveloppe extérieure 10 est munie, à chacune de ses extrémités, d'une platine 11. Chaque platine 11 comporte un orifice axial 12 permettant le passage du stator 2 lors de son introduction dans l'enveloppe extérieure 10 de la carcasse 3.

L'orifice 12 de chaque platine 11 est obturé par un fond, non représenté, muni d'un orifice axial dans lequel est monté un palier, non représenté, d'un arbre solidaire d'un rotor, non représenté. Chaque fond est fixé de manière étanche sur la platine 11 correspondante par des éléments de vissage, non représentés, de façon à former avec l'enveloppe extérieure 10 de la carcasse 3 une enceinte étanche. Cette enceinte étanche renferme un gaz, tel que du gaz naturel, comprimé à une pression supérieure à 100 bar de préférence supérieure à 150 bar.

Afin de faire circuler le courant au travers de la paroi de l'enveloppe extérieure 10 de la carcasse 3, cette carcasse 3 comporte, ainsi que montré sur les Figs. 1 et 2, une pluralité de traversées électriques 15 périphériques s'étendant radialement. Chaque traversée 15 permet le passage d'un élément de connexion électrique 20 avec la tête d'un desdits bobinages 4.

Chaque traversée 15 est ménagée dans la carcasse à proximité de la tête du bobinage 4 à raccorder. Ces traversées 15 sont réparties sur l'enveloppe extérieure 10 de la carcasse 3 de façon à ne pas modifier la tenue mécanique de cette carcasse 3.

Chaque élément de connexion 20 est formé par une première partie 21 et une seconde partie 22.

La première partie 21 est constituée par un passe-tige disposé dans la traversée 15 correspondante. Ce passe-tige est par exemple du type décrit dans la demande de brevet en France n° 09 53 227 et qui comporte un corps central 21 a monté de manière étanche dans la traversée 15 correspondante.

Le corps central 21 a est traversé par une tige longitudinale électriquement conductrice munie à chacune de ses extrémités d'une borne de connexion électrique 21 b. Ainsi une borne de connexion 21 b est disposée à l'extérieur de la carcasse 3 et l'autre borne de connexion 21 b est disposée à l'intérieur de ladite carcasse 3.

La seconde partie 22 de chaque élément de connexion 20 est formée par une liaison rigide préfabriquée, comme par exemple une barrette de cuivre isolée s'étendant depuis une tête du bobinage 4 jusqu'à la borne de connexion 21 b de l'élément de connexion 20 le plus proche. Le nombre de traversées 15 peut être multiplié selon les besoins.

A l'extérieur de la carcasse 3, les câbles des différentes traversées 15 peuvent être connectés jusqu'à une boîte à bornes, non représentée, ne posant aucun problème d'étanchéité du fait qu'elle est a la pression atmosphérique. Lors d'une dépressurisation rapide, les barrettes de cuivre isolée présentent toutes les garanties de sécurité indispensable.

La disposition de traversées électriques individuelles disposées à la périphérie de la carcasse et non plus concentrées sur une bride, permet d'installer un nombre important de traversées et ainsi d'augmenter la puissance de la machine électrique.

## Revendications

1. Machine électrique (1) du type comprenant une carcasse (3) formée par une enceinte étanche contenant un gaz comprimé, un arbre relié à la carcasse (3), un rotor solidaire de l'arbre et un stator (2) portant des bobinages (4), **caractérisée en ce que** la carcasse (3) comporte une pluralité de traversées électriques (15) périphériques s'étendant radialement pour le passage dans chacune desdites traversées (15) d'un élément de connexion (20) électrique avec la tête d'un desdits bobinages (4).

2. Machine électrique (1) selon la revendication 1, **caractérisée en ce que** chaque traversée (15) est ménagée dans la carcasse (3) à proximité de la tête du bobinage (4) à raccorder.

3. Machine électrique selon la revendication 1 ou 2, **caractérisée en ce que** chaque élément de connexion (20) est formé par une première partie (21) comportant un passe-tige disposé dans la traversée (15) correspondante et par une seconde partie (22) reliant ledit passe-tige à la tête du bobinage (4) correspondant.

4. Machine électrique (1) selon la revendication 3, **caractérisée en ce que** la seconde partie (22) est formée par une barrette de cuivre isolée.

5. Machine électrique (1) selon l'une quelconque des revendications 1 à 4, **caractérisée en ce que** le gaz à l'intérieur de la carcasse (3) est comprimé à une pression supérieure à 100 bar, de préférence supérieure à 150 bar.

## Patentansprüche

1. Elektrische Maschine (1) der Art, die ein Gehäuse (3), das von einer ein komprimiertes Gas enthaltenden dichten Umhüllung gebildet wird, eine mit dem Gehäuse (3) verbundene Welle, einen mit der Welle verbundenen Rotor und einen Wicklungen (4) tragenden Stator (2) aufweist, **dadurch gekennzeichnet, dass** das Gehäuse (3) eine Mehrzahl von elektrischen umfänglichen Durchführungen (15) aufweist, die sich radial für den Durchgang eines elektrischen Elements (20) zur Verbindung mit dem Kopf eines der Wicklungen (4) in jeder der Durchführungen (15) erstrecken.

2. Elektrische Maschine (1) nach Anspruch 1, **dadurch gekennzeichnet, dass** jede Durchführung (15) in dem Gehäuse (3) in der Nähe des Kopfes der zu verbindenden Wicklung (4) eingearbeitet ist.

3. Elektrische Maschine nach Anspruch 1 oder 2, **dadurch gekennzeichnet, dass** jedes Verbindungselement (20) aus einem ersten Teil (21), das einen in der korrespondierenden Durchführung (15) angeordneten Durchgangsstift und einen zweiten Teil (22), der den Durchgangsstift mit dem Kopf der korrespondierenden Wicklung (4) verbindet, gebildet ist.

4. Elektrische Maschine (1) nach Anspruch 3, **dadurch gekennzeichnet, dass** das zweite Teil (22) von einem isolierten Kupfersteg gebildet wird.

5. Elektrische Maschine (1) nach einem beliebigen der Ansprüche 1 bis 4, **dadurch gekennzeichnet, dass** das Gas im Inneren des Gehäuses (3) auf einen Druck größer als 100 bar, vorzugsweise größer als 150 bar, komprimiert ist.

## Claims

1. Electric machine (1) of the type comprising a carcass (3) formed by a sealed enclosure containing a compressed gas, a shaft connected to the carcass (3), a rotor connected to the shaft and a stator (2) carrying windings (4), **characterised in that** the carcass (3) has a plurality of radially extending peripheral electrical lead-through fittings (15) to provide a passage in each of said lead-through fittings (15) for an element (20) providing an electrical connection to the head of one of said windings (4).

2. Electric machine (1) as claimed in claim 1, **characterised in that** each lead-through fitting (15) is disposed in the carcass (3) close to the head of the winding (4) to be connected.

3. Electric machine as claimed in claim 1 or 2, **characterised in that** each connecting element (20) is formed by a first part (21) comprising a rod bushing disposed in the corresponding lead-through fittings (15) and by a second part (22) connecting said rod bushing to the head of the corresponding winding (4).

4. Electric machine (1) as claimed in claim 3, **characterised in that** the second part (22) is formed by an insulated copper bar.

5. Electric machine (1) as claimed in any one of claims 1 to 4, **characterised in that** the gas inside the carcass (3) is compressed to a pressure greater than 100 bar, preferably greater than 150 bar.
